# EUROPEAN PATENT SPECIFICATION

(11) **EP 0 479 252 B1**
(45) Date of publication and mention of the grant of the patent: **23.04.1997**
(21) Application number: 91116790.6
(22) Date of filing: 01.10.1991
(51) Int. Cl.: G11B 5/31

(54) **Magnetic head**
Magnetischer Kopf
Tête magnétique

(30) Priority: 05.10.1990 JP 267966/90
(43) Date of publication of application: 08.04.1992
(73) Proprietor: TDK Corporation, Chuo-ku, Tokyo-to 103 (JP)
(72) Inventor: Ezaki, Joichiro, TDK Corporation, Chuo-ku, Tokyo 103 (JP); Fukuda, Kazumasa, TDK Corporation, Chuo-ku, Tokyo 103 (JP); Ito, Yoshiaki, TDK Corporation, Chuo-ku, Tokyo 103 (JP)
(74) Representative: Liesegang, Roland, Dr.-Ing.

(56) References cited:
- EP-A- 0 144 150
- EP-A- 0 452 846
- PATENT ABSTRACTS OF JAPAN vol. 9, no. 214 (P-384)(1937) 31 August 1985 & JP-A-60 074 111 ( FUJITSU K.K. ) 26 April 1985
- PATENT ABSTRACTS OF JAPAN vol. 9, no. 148 (P-366)(1871) 22 June 1985 & JP-A-60 025 014 ( HITACHI SEISAKUSHO K.K. ) 7 February 1985
- PATENT ABSTRACTS OF JAPAN vol. 10, no. 290 (P-503)(2346) 2 October 1986 & JP-A-61 107 515 ( FUJITSU LTD ) 26 May 1986
- Digests of INTERnational MAGnetics Conference, April 13-16, 1993, Stockholm, p. HB-02
- IBM "Disk Storage Technology", February 1980

## Description

The present invention relates to a longitudinal magnetic head which comprises a pair of poles between which a transducing gap is formed.

A typical magnetic head has such a construction that a pair of poles face each other by interposing a transducing gap therebetween.

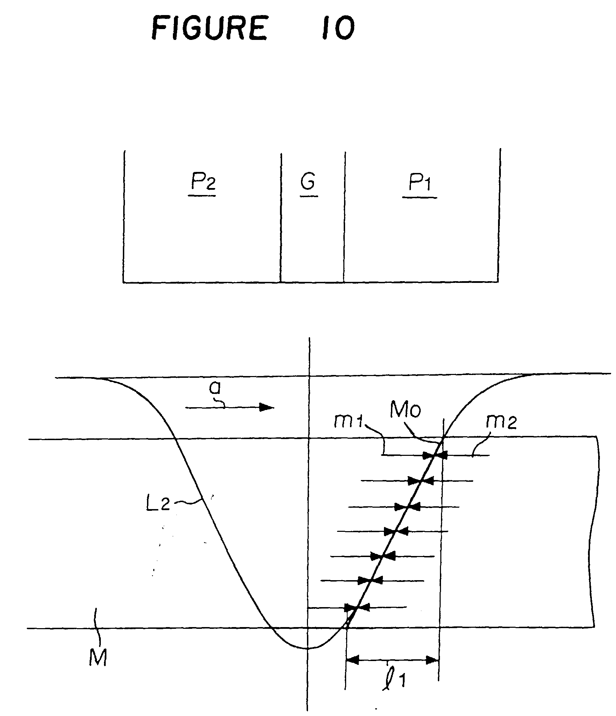

Figure 10 is a diagram showing the basic construction of a conventional magnetic head and a magnetic field distribution at the time of writing. In Figure 10, symbols P₁ and P₂ represent respectively magnetic poles (hereinafter, referred to as poles), a symbol G represents a transducing gap, M denotes a magnetic recording medium such as a magnetic disc, and a symbol a represents the direction of moving the recording medium. Further, L₂ represents a magnetic field distribution at the time of writing, Mₒ is a magnetization reversing portion, m₁ and m₂ are respectively the directions of magnetization and ℓ₁ represents a magnetization reversing region. The magnetization reversing region ℓ₁ is determined mainly by the pole position at the medium outflow side, i.e. the magnetic field at the side of the pole which is located backward with respect to the direction a of moving the recording medium (i.e. the pole P₁ in Figure 10).

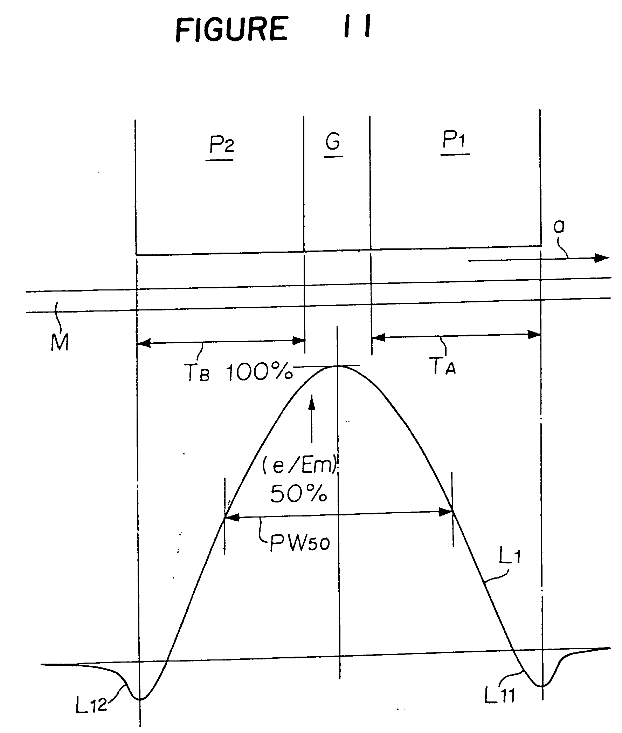

Figure 11 is a diagram showing the magnetic head as shown in Figure 10 and a reproduced waveform L₁ produced by the magnetic head. The reproduced waveform L₁ is a waveform obtained when a signal, which has been recorded in the magnetic recording medium with use of the magnetic head having the pole structure and providing the magnetic field distribution as shown in Figure 10, is reproduced by using the same magnetic head. In Figure 11, the abscissa represents time, and the ratio of an instantaneous value e to the maximum value Em (e/Em) is shown in percentage in the ordinate. L₁₁ and L₁₂ respectively indicate undershoot portions. PW₅₀ represents a pulse width at which the ratio of the instantaneous value e to the maximum value Em (e/Em) becomes 50%. The value PW₅₀ represents the magnitude of steepness of the reproduced waveform L₁. When the value PW₅₀ is small, the reproduced waveform L₁ becomes steep. When the value PW₅₀ becomes large, the reproduced waveform L₁ becomes dull.

The above-mentioned conventional magnetic head has, however, the problems as follows.
(A) In order to achieve high density recording, it is necessary to steepen the reproduced waveform L₁ to thereby prevent mutual interference by the adjacent pulses. The magnitude of steepness of the reproduced waveform L₁ is evaluated by the value PW₅₀ as described above. In order to steepen the reproduced waveform L₁, it is required to steepen the magnetic field distribution produced by the magnetic head. The magnetic field distribution L₂ is mainly determined by the length (thickness) of the poles P₁ and P₂ and the gap length. In the conventional magnetic head, the thickness T_{A} or T_{B} of the edge at the edge surface of the pole P₁ or P₂ is determined by the thickness of a magnetic film formed in manufacturing steps. Accordingly, it is impossible to steepen the magnetic field distribution L₂ more than being obtained by the manufacturing steps. Further, the reproduced waveform L₁ becomes dull due to the difference in a coercive force H_{c} (coercive force distribution) which always results from the magnetic layer of a magnetic recording medium, besides the magnetic field distribution L₂. Accordingly, it is difficult to further steepen the reproduced waveform L₁ and the magnetic field distribution L₂, which constitutes a big problem in achieving high density recording.
(B) As shown in Figure 11, the reproduced waveform L₁ includes undershoot portions L₁₁ and L₁₂, which result from pseudopulses, at positions corresponding to outer edges of the poles P₁, P₂. The appearance of the undershoot portions L₁₁, L₁₂ are particularly remarkable in a thin film magnetic head having a substantial thickness of pole. Since the existence of the undershoot portions L₁₁, L₁₂ gives a large peak shift in a case of high density recording, there causes a limit in error margin or phase margin in a reading operation. This results in a big problem in the achievement of high density recording and difficulty in applying the Partial Response Maximum Likelihood Method.
(C) It is possible to steepen the reproduced waveform L₁ and the magnetic field distribution L₂ by reducing the thickness T_{A} and T_{B} of the pole P₁ and P₂. However, when the thickness T_{A} and T_{B} of the pole P₁ and P₂ is made small, the intensity of the magnetic field produced also becomes small, whereby the writable performance decreases and the overwrite characteristic becomes poor.

It is an object of the present invention to eliminate the disadvantages of the conventional magnetic head, and to provide a magnetic head which enables high density recording by eliminating undershoot portions of the reproduced waveform and by steepening the magnetic field distribution and the reproduced waveform without reducing the writable performance.

The foregoing and other objects of the present invention have been attained by providing a magnetic head according to claim 1.

In the present invention, the end surface of at least one pole of the pair of poles which face each other by interposing the transducing gap therebetween is constituted by first and second end surfaces, wherein said second end surface is formed at a position opposite said transducing gap with respect to said first end surface and is retracted from the first end surface. Accordingly, the thickness of the edge portion of the end surface of the pole which contributes electromagnetic transducing can be reduced to the extent of a value which is determined by the thickness of the edge of the first end surface. Accordingly, the magnetic field distribution and the reproduced waveform can be steepened, and therefore, it is possible to obtain high density recording and reproducing. In particular, by constructing the end surface of the pole at the medium outflow end side to have the first and second end surfaces, the gradient in strength of the magnetic field at the medium outflow end side by which a magnetic distribution on the medium is determined can be steepened.

Further, since the second end surface is formed at a position opposite the transducing gap with respect to the first end surface and is retracted from the first end surface, the substantially same effect as if the magnetic characteristic of the pole is gradually decreased to the direction of moving the magnetic recording medium can be obtained. Accordingly, the undershoot portions can be weakened to the negligible extent and the Partial Response Maximum Likelihood Method can be applied.

Since the thickness of the edge of the end surface of the pole is the sum of the thickness of the edge of the first and second end surfaces, the writable performance can be maintained, and therefore, the overwrite characteristic is not sacrificed.

The amount of retraction of the second end surface is determined in a range of 0.001 micrometer-5 micrometers preferably, 0.001 micrometer-1micrometer. When the amount of retraction exceeds 5 micrometers, the overwrite characteristic is deteriorated. On the other hand, when it is less than 0.001 micrometer, the PW₅₀ value becomes rapidly large. Further, the thickness (length) of the edge of the first end surface is determined to be 1.5 micrometers or less, preferably, 0.5 micrometer or less because the value of such range makes the PW₅₀ value small rapidly.

The Art. 54(3) document EP-A-452846 discloses a longitudinal head with an end surface retracted with an amount of retraction ranging from 0.3 to 0.8 micrometer and a pole thickness ranging from 0.3 to 0.8 micrometer.

JP-A-60-74111 discloses a thin film magnetic head wherein the edge portion of the magnetic layer is removed by etching with an accuracy of 1 micrometer or submicron. Further, JP-A-61-107515 discloses a thin film magnetic head wherein a projection is formed at the edge portion of the magnetic layer, the tip of said projection being retracted by an amount of nearly 1 micrometer from the surface of the head. By the present invention a high density recording magnetic head is obtained which can steepen the magnetic field distribution of the pole and the reproduced waveform; assures the writable performance, and has an excellent overwrite characteristic.

In drawings:
Figure 1 is a diagram showing the construction of an embodiment of the pole part of the magnetic head according to the present invention and a magnetic field distribution produced by a magnetic head;
Figure 2 is a diagram showing the construction of the pole part as shown in Figure 1 and a reproduced waveform produced by the pole part;
Figure 3 is a diagram showing another embodiment of the pole part of the magnetic head according to the present invention and a reproduced waveform produced by the pole part;
Figure 4 is a diagram showing the pole part of a magnetic head from the prior art and a reproduced waveform produced by the pole part;
Figure 5 is a cross-sectional view partly broken of the transducing portion of the thin film magnetic head to which the present invention is applied;
Figure 6 is a cross-sectional view partly broken of the transducing part of a thin film magnetic head known from the prior art;
Figure 7 is a diagram showing the relation of the thickness of the edge of the pole of a magnetic head to the PW₅₀ value according to the present invention;
Figure 8 is a diagram showing the relation of an amount of retraction of the second end surface of the pole to the PW₅₀ value;
Figure 9 is a diagram showing the relation of an amount of retraction of the second end surface to the overwrite characteristic;
Figure 10 is a diagram showing the basic construction of a conventional magnetic head and a magnetic field distribution at a writing time; and
Figure 11 is a diagram showing a conventional magnetic head and a reproduced waveform.

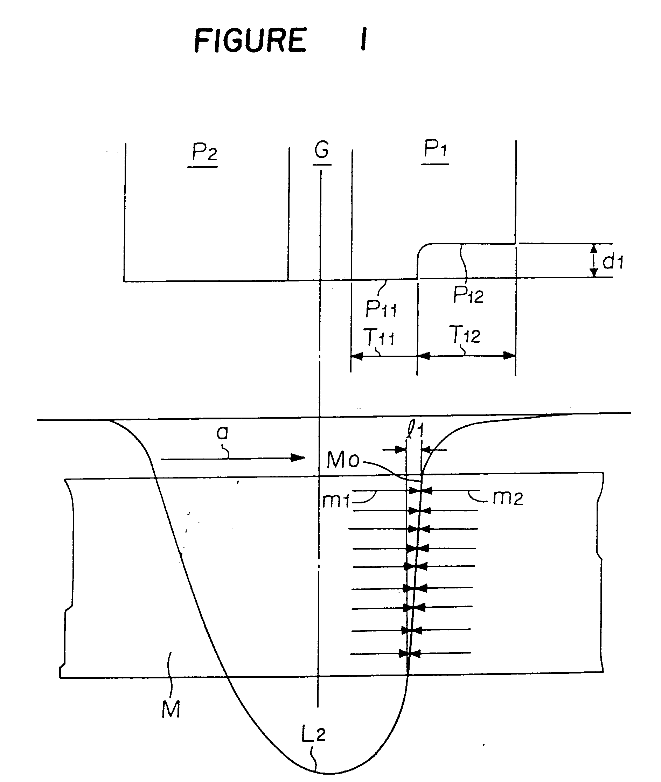

Referring to the drawings wherein the same reference numerals and symbols designate the same or corresponding parts, and more particularly to Figure 1 thereof, there is shown a diagram showing the construction of the pole part of the magnetic head according to an embodiment of the present invention and a magnetic field distribution produced by the pole part.

The magnetic head as shown in Figure 1 comprises a pair of poles P₁ and P₂ which face each other by interposing a transducing gap G therebetween. Of the pair of the poles P₁ and P₂, the pole P₁ disposed at the medium outflow end side is constituted by first and second end surfaces P₁₁ and P₁₂ which face a magnetic recording medium. The second end surface P₁₂ is formed at a position opposite the transducing gap G with respect to the first end surface P₁₁ and is retracted stepwisely with an amount of retraction d₁ from the first end surface P₁₁. The amount of retraction d₁ is so determined that the second end surface P₁₂ can be substantially neglected with respect to the magnetic field distribution and the second end surface P₁₂ can be considered as one body to the first end surface P₁₁ with respect to magnetic saturation.

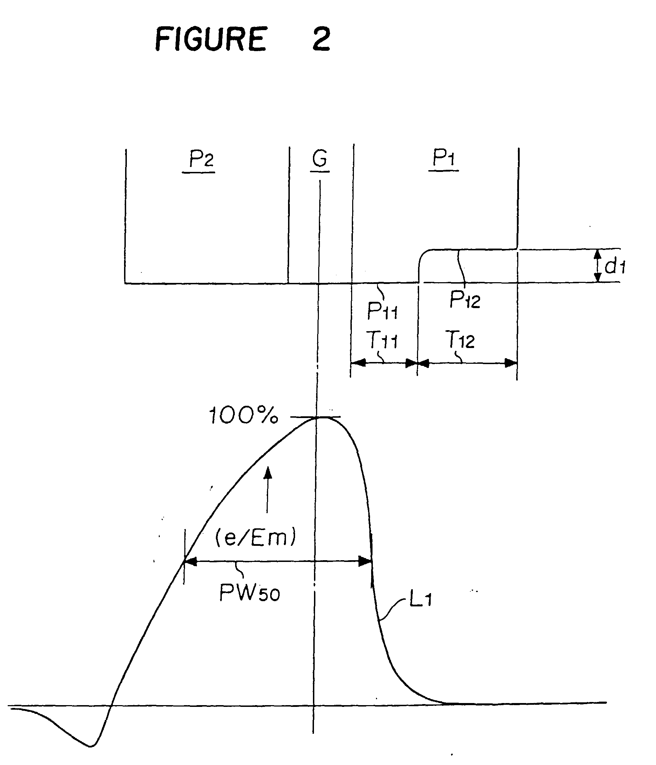

As described above, since the magnetic head according to the embodiment of the present invention is so constructed that at least the pole P₁ at the medium outflow end side between the pair of poles P₁, P₂ which oppose by interposing the transducing gap G therebetween, comprises the first and second end surfaces P₁₁ and P₁₂ which face the magnetic recording medium, and the second end surface P₁₂ is formed at the position opposite the transducing gap G and is retracted from the first one surface P₁₁, the length (thickness) of the edge of the pole end surface which contributes electromagnetic transducing can be reduced to the extent of a value determined by the thickness T₁₁ of the edge of the first end surface P₁₁. Accordingly, the magnetic field distribution L₂ can be steepened as shown in Figure 1, and the gradient in intensity of the magnetic field at the medium outflow end side by which magnetization distribution L₂ on the recording medium is determined, can be steepened. Accordingly, the transition region (magnetization reversing region) of the magnetic recording medium can be narrowed, and the reproduced waveform L₁ can also be steepened as shown in Figure 2, whereby the PW₅₀ value can be small and it is possible to obtain high density recording.

In a case that a magnetic information recorded in the magnetic recording medium is reproduced, the substantially same effect can be obtained as if the magnetic characteristic of the pole P₁ is gradually decreased to the direction of moving the magnetic recording medium M. Accordingly, the undershoot at the position corresponding to the pole P₁ can be weakened to the negligible extent as shown in Figure 2 and it is possible to apply the Partial Response Maximum Likelihood Method.

Since the entire thickness of the edge of the end surface of the pole P₁ can be maintained as the sum of the thickness T₁₁ of the edge of the first end surface P₁₁ and the thickness T₁₂ of the edge of the second end surface P₁₂, i.e. T₁₁ + T₁₂, the writable performance is not sacrificed.

The amount of retraction d₁ of the second end surface P₁₂ is determined in a range of 0.001 micrometer-5 micrometers. When the amount of retraction d₁ exceeds 5 micrometers, the overwrite characteristic is deteriorated. When the amount of retraction d₁ is less than 0.001 micrometer, the PW₅₀ value rapidly becomes large. Further, the thickness T₁₁ of the edge of the first end surface P₁₁ is determined to be less than 1.5 micrometers because the PW₅₀ value rapidly becomes small in such range.

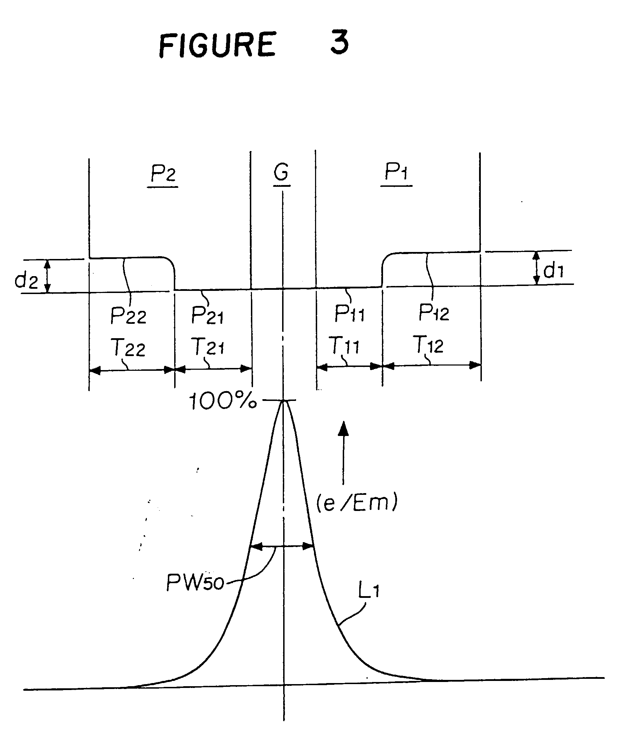

Figure 3 is a diagram showing another embodiment of the magnetic head according to the present invention. In this embodiment, the pole P₂ comprises first and second end surfaces P₂₁ and P₂₂ which face the magnetic recording medium. The second end surface P₂₂ is formed at a position opposite the transducing gap G with respect to the first end surface P₂₁ and is retracted stepwisely with an amount of retraction d₂ from the first end surface P₂₁. The dimensions such as the amount of retraction d₂, the thickness T₂₁ of the edge of the first end surface P₂₁ and the thickness T₂₂ of the edge of the second end surface P₂₂ are determined on the basis as described with reference to the embodiment as shown in Figure 1. In the case of the embodiment shown in Figure 2, the magnetic field distribution L₂ and the reproduced waveform L₁ are steepened by both poles P₁, P₂.

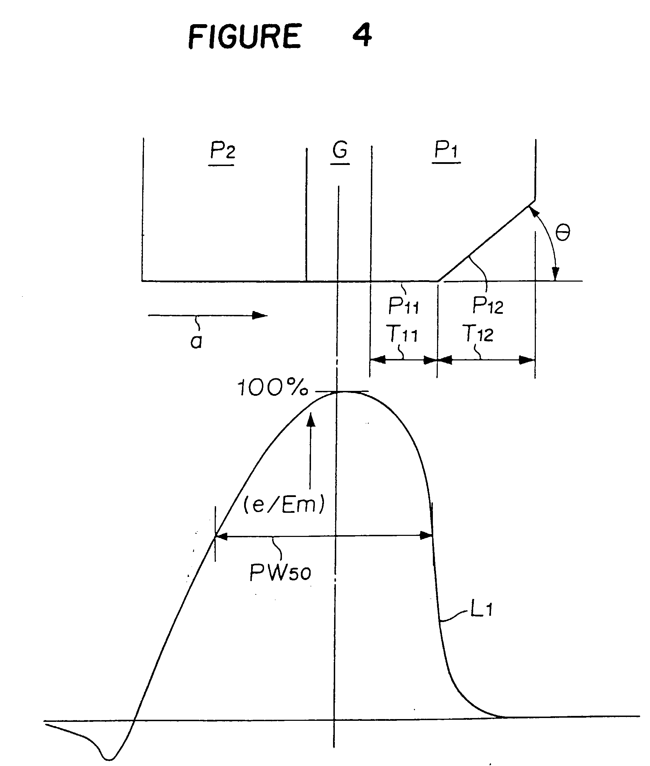

Figure 4 shows an embodiment of a magnetic head known from the prior art. In this embodiment, the second end surface P₁₂ is formed as a slanting surface which inclines at an angle θ.

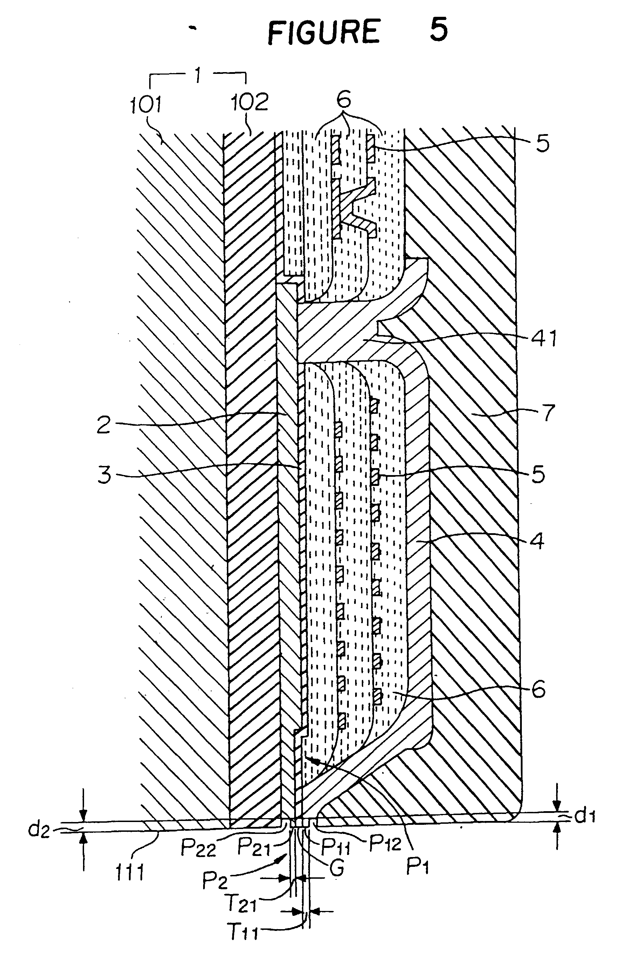

Figure 5 is a cross-sectional view showing the transducing part of a thin film magnetic head to which the present invention is applied. In Figure 5, reference numeral 1 designates a substrate formed of ceramics, numeral 2 designates a lower magnetic film, numeral 3 designates a transducing gap film formed of a material such as alumina, numeral 4 designates an upper magnetic film, numeral 5 designates a coil film, numeral 6 designates an insulating film formed of an organic insulating resinous material such as nobolack resin, and numeral 7 designates a protecting film made of a material such as alumina.

The substrate 1 comprises a main body 101 formed of a material such as Al₂O₃-TiO₂ or the like and an insulating film 102 such as Al₂O₃ formed on a surface of the substrate 101. A magnetic circuit is formed on the insulating film 102. The edge portion of the lower magnetic film 2 and the upper magnetic film 4 respectively form poles P₂ and P₁ which oppose, interposing the transducing gap film 3 of alumina or the like therebetween, whereby reading and writing operations are performed by means of the poles P₂, P₁. The poles P₁ and P₂ face each other through a transducing gap G constituted by the transducing gap film 3. The upper magnetic film 4 is connected to a yoke portion 21 of the lower magnetic film 2 by means of a connecting portion 41 at the backward region opposite the pole P₁. The coil film 5 is formed so as to surround spirally the connecting portion 41.

The pole P₁ has the pole end surface which faces the magnetic recording medium and which comprises first and second end surfaces P₁₁ and P₁₂. The second end surface P₁₂ is formed opposite the transducing gap film 3 with respect to the first end surface P₁₁ and is retracted stepwisely by an an amount of retraction d₁ from the first end surface P₁₁. The amount of retraction d₁ is so selected that the second end surface P₁₂ is substantially negligible with respect to the magnetic field distribution and it can be considered to be integrally with the first end surface P₁₁ with respect to magnetic saturation. Specifically, the amount of retraction should be in a range of 0.001 micrometer-1 micrometer. The thickness (length) T₁₁ of the edge of the first end surface P₁₁ is about 0.5 micrometer, and the remaining is the thickness (length) T₁₂ of the edge of the second end surface P₁₂. The formation of such step portion can be achieved by, for instance, a photolithography process or an ion milling process.

With the above-mentioned construction of the poles P₁, P₂, the thickness (length) of the edge of the pole end surface P₁₁ which contributes to the electromagnetic transducing function can be reduced to a value determined by the thickness (length) T₁₁ of the first end surface P₁₁. Accordingly, the magnetic field distribution can be steepened and the PW₅₀ value in the reproduced waveform can be small, whereby high density recording is possible without reducing the writable performance.

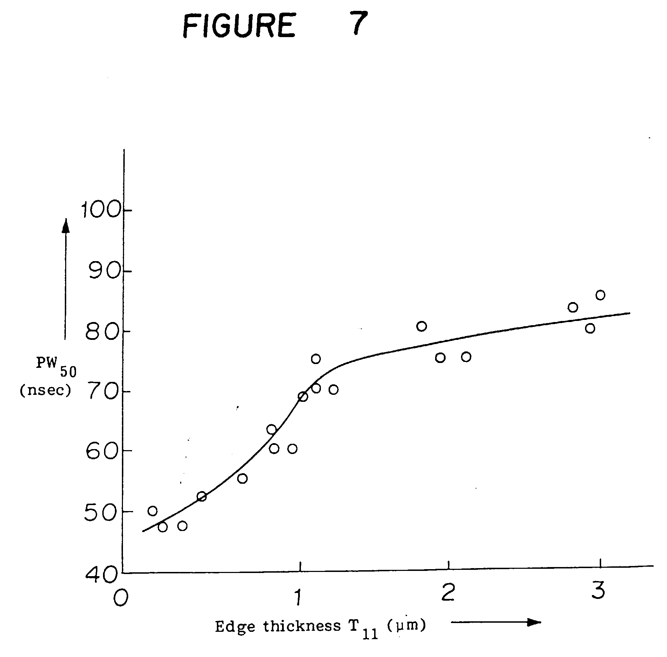

Figure 7 is a graph showing the relation between the thickness (length) T₁₁ of the edge of the first end surface P₁₁ and the PW₅₀ value. When the thickness T₁₁ of the edge of the first end surface is less than 1 micrometer, the PW₅₀ value becomes rapidly small. Accordingly, it is desirable to determine the thickness T₁₁ to be 1.5 micrometers or less.

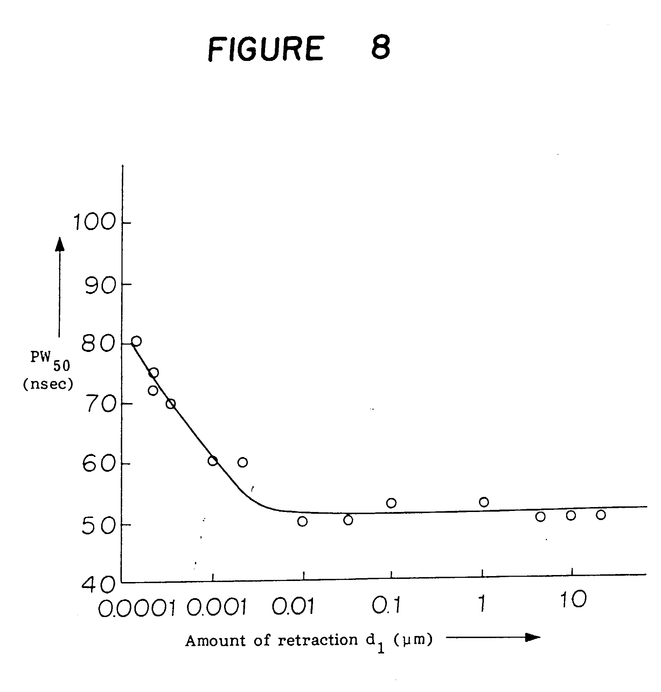

Figure 8 is a graph showing the relation between the amount of retraction d₁ to the PW₅₀ value. When the amount of retraction d₁ is less than 0.001 micrometer, the PW₅₀ value becomes rapidly small and becomes stable in a small value as about 50 nsec. Accordingly, it is desirable that the amount of retraction d₁ is determined to be 0.001 micrometer or more.

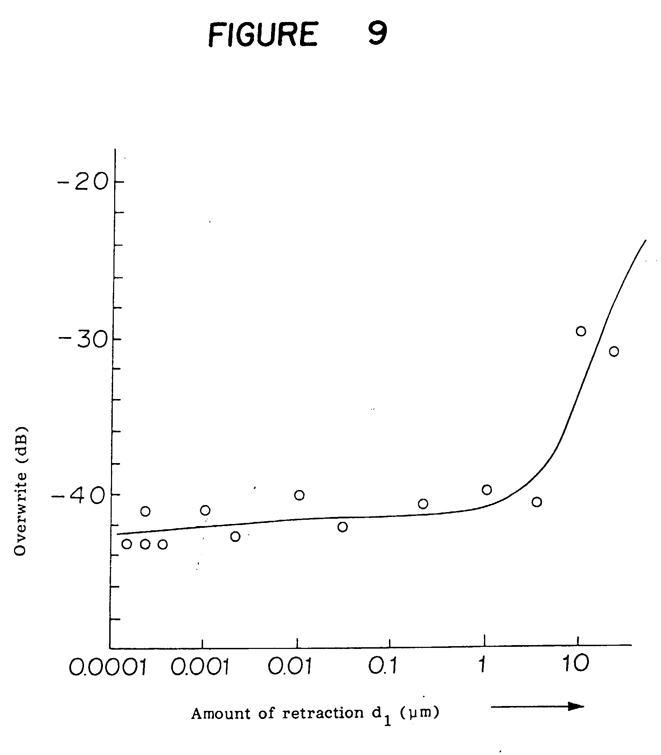

Figure 9 is a graph showing the relation between the amount of retraction d₁ and the overwrite characteristic.

As is clear from the data shown in Figures 7-9, when the retraction angle d₁ is in a range of 0.001 micrometer-1 micrometer and the thickness (length) T₁₁ of the edge of the first end surface is 0.5 micrometer or less in the thin film magnetic head of the present invention, a well balanced condition is obtainable.

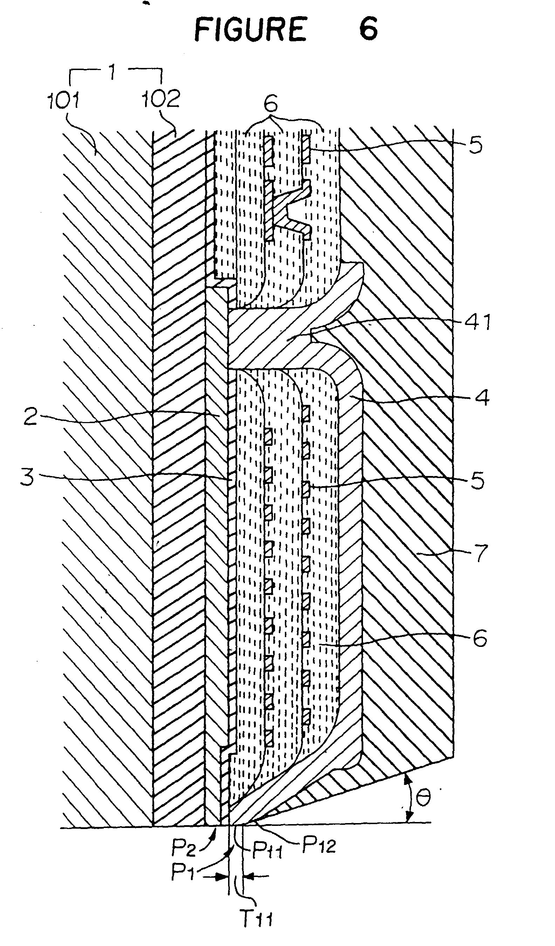

Figure 6 is a cross-sectional view partly broken of an embodiment of a thin film magnetic head known from the prior art. The thin film magnetic head of this embodiment is applied with the technical idea shown in Figure 4 wherein the pole P₁ at the edge portion of the upper magnetic film 4 on which the protective film 7 is formed has a slanting surface inclined at an angle θ together with the protective film, and the slanting surface is utilized as the second end surface P₁₂. The inclined surface can be formed by, for instance, a grinding operation.

In Figures 5 and 6, description has been made as to the thin film magnetic head to which the present invention is applicable. However, the present invention is also applicable to another type of magnetic head such as a monolithic magnetic head or a composite magnetic head.

In accordance with the present invention, the following advantages can be obtained.
(a) Since the magnetic head of the present invention comprises a pair of magnetic poles opposing with a transducing gap between the magnetic poles, wherein the end surface opposing a magnetic recording medium of at least one of the pair of magnetic poles is constituted by first and second end surfaces; wherein the second end surface is formed at a position opposite the transducing gap with respect to the first end surface and is retracted stepwisely from the first end surface in an amount of retraction ranging from 0.001 micrometer- 5 micrometers, and wherein the thickness (length) of the first end surface at its free end is not more than 1.5 micrometers, the magnetic field distribution and the reproduced waveform formed by the poles can be steepened. Thus, the magnetic head suitable for high density recording can be provided.
(b) Since the second end surface is formed at a position opposite the transducing gap with respect to the first end surface and is retracted from the first end surface, the undershoot portion can be weakened to the negligible extent and the Partial Response Maximum Likelihood Method can be applied to the magnetic head.
(c) A high density recording magnetic head capable of steepening the electric field distribution and the reproduced waveform, assuring the writable performance and having an excellent overwrite characteristics can be provided.

## Claims

1. A longitudinal magnetic head which comprises a pair of magnetic poles (P₁,P₂) between which a transducing gap (G) is formed, wherein the end surface opposing a magnetic recording medium of at least one (P₁) of said pair of magnetic poles is constitued by first and second end surfaces (P₁₁,P₁₂) ; wherein said second end surface (P₁₂) is formed at a position opposite said transducing gap (G) with respect to said first end surface (P₁₁) and is retracted from the first end surface in an amount (d₁) of retraction ranging from 0.001 micrometer to 1 micrometer, and wherein the thickness (T₁₁) of the first end surface (P₁₁) at its free end is more than 0.8 micrometer and not more than 1.5 micrometer and wherein said second end surface (P₁₂,P₂₂) is a surface retracted stepwisely from said first end surface (P₁₁,P₂₁).

2. The magnetic head according to claim 1, wherein said pole having the first and second end surfaces is formed at the medium outflow end side.

3. The magnetic head according to claim 1, wherein said pair of poles (P₁,P₂) and transducing gap (G) are formed of thin films.

## Patentansprüche

1. Längs-Magnetkopf, welcher ein Paar Magnetpole (P₁, P₂) aufweist, zwischen denen ein Wandlerspalt (G) ausgebildet ist, wobei die einem Magnetaufzeichnungsmedium gegenüberliegende Stirnfläche wenigstens eines Poles (P₁) des Magnetpolpaares von einer ersten und einer zweiten Stirnfläche (P₁₁, P₁₂) gebildet wird; wobei die zweite Stirnfläche (P₁₂) bei einer Position ausgebildet ist, die dem Wandlerspalt (G) in Bezug auf die erste Stirnfläche (P₁₁) gegenüberliegt und gegenüber der ersten Stirnfläche um eine Größe (d₁) zurückgezogen ist, welche im Bereich von 0,001 bis 1 Mikrometer liegt, und wobei die Dicke (T₁₁) der ersten Stirnfläche (P₁₁) an ihrem freien Ende größer als 0,8 Mikrometer und nicht größer als 1,5 Mikrometer ist, und wobei die zweite Stirnfläche (P₁₂, P₂₂) eine Oberfläche ist, welche gegenüber der ersten Stirnfläche (P₁₁, P₂₁) stufenartig zurückgezogen ist.

2. Magnetkopf nach Anspruch 1, bei dem der Pol mit der ersten und der zweiten Stirnfläche auf der Seite des Mediumausströmendes ausgebildet ist.

3. Magnetkopf nach Anspruch 1, bei dem das Polpaar (P₁, P₂) und der Wandlerspalt (G) aus Dünnfilmen hergestellt sind.

## Revendications

1. Tête magnétique longitudinale comprenant une paire de pôles magnétiques (P₁ , P₂ ) entre lesquels un entrefer de transducteur (G) est constitué, dans laquelle la surface d'extrémité opposée à un support d'enregistrement magnétique d'au moins un (P₁) de ladite paire de pôles magnétiques est constituée par des première et seconde surfaces d'extrémité (P₁₁ , P₁₂); dans laquelle ladite seconde surface d'extrémité (P₁₂) est formée en une position opposée audit entrefer de transducteur (G) au regard de ladite première surface d'extrémité (P₁₁) et se trouve rétractée de la première surface d'extrémité d'un degré (d₁) de rétraction situé dans l'intervalle 0,001 micron à 1 micron et dans laquelle l'épaisseur (T₁₁) de la première surface d'extrémité (P₁₁) à son extrémité libre est supérieure à 0,8 micron et n'est pas supérieure à 1,5 micron et dans laquelle ladite seconde surface d'extrémité (P₁₂, P₂₂) est une surface rétractée progressivement de ladite première surface d'extrémité (P₁₁, P₂₁).

2. Tête magnétique selon la revendication 1, dans laquelle ledit pôle doté des première et seconde surfaces d'extrémité est réalisé du côté de l'extrémité d'échappement du support.

3. Tête magnétique selon la revendication 1, dans laquelle ladite paire de pôles (P₁, P₂) et l'entrefer de transducteur sont réalisés en films minces.
